(19) Europäisches Patentamt / European Patent Office / Office européen des brevets

(11) **EP 4 281 812 B1**

(12) **EUROPEAN PATENT SPECIFICATION**

(45) Date of publication and mention of the grant of the patent:
**23.07.2025 Bulletin 2025/30**

(21) Application number: **21708740.2**

(22) Date of filing: **25.01.2021**

(51) International Patent Classification (IPC):
*G01V 1/30* *(2006.01)*

(52) Cooperative Patent Classification (CPC):
**G01V 1/301;** G01V 2210/643

(86) International application number:
**PCT/IB2021/000054**

(87) International publication number:
**WO 2022/157529 (28.07.2022 Gazette 2022/30)**

(54) **METHOD AND SYSTEM FOR PROCESSING SEISMIC IMAGES TO OBTAIN AN RGT IMAGE BY USING A DECIMATED SEISMIC DIP IMAGE**

VERFAHREN UND SYSTEM ZUR VERARBEITUNG SEISMISCHER BILDER ZUR GEWINNUNG EINES RGT-BILDES UNTER VERWENDUNG EINES DEZIMIERTEN SEISMISCHEN DIP-BILDES

PROCÉDÉ ET SYSTÈME DE TRAITEMENT D'IMAGES SISMIQUES POUR OBTENIR UNE IMAGE RGT À L'AIDE D'UNE IMAGE D'INCLINAISON SISMIQUE DÉCIMÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.11.2023 Bulletin 2023/48**

(73) Proprietor: **TOTALENERGIES ONETECH**
**92400 Courbevoie (FR)**

(72) Inventor: **KESKES, Noomane**
**64018 Pau Cedex (FR)**

(74) Representative: **Plasseraud IP**
**104 Rue de Richelieu**
**CS92104**
**75080 Paris Cedex 02 (FR)**

(56) References cited:
**EP-A2- 2 917 770**

- **VAN HOEK TOMAS ET AL: "Geometric attributes for seismic stratigraphic interpretation", THE LEADING EDGE, vol. 29, no. 9, 1 September 2010 (2010-09-01), US, pages 1056 - 1065, XP055846456, ISSN: 1070-485X, DOI: 10.1190/1.3485766**
- **JACK HOYES ET AL: "A review of "global" interpretation methods for automated 3D horizon picking", THE LEADING EDGE, 1 January 2011 (2011-01-01), pages 39 - 47, XP055103790**
- **XINMING WU AND DAVE HALE: "Horizon volumes with interpreted constraints", GEOPHYSICS, SOCIETY OF EXPLORATION GEOPHYSICISTS, US, vol. 80, no. 2, 1 March 2015 (2015-03-01), pages IM21 - IM33, XP001594504, ISSN: 0016-8033, [retrieved on 20150202], DOI: 10.1190/GEO2014-0212.1**

**Description**

## TECHNICAL FIELD

The present disclosure relates to the processing of seismic images of a geological formation in order to obtain a chrono-stratigraphic representation of the geological formation, a.k.a. relative geological time, RGT, image of the geological formation.

## BACKGROUND ART

It is known, especially in oil exploration, to determine the position of oil reservoirs from the results of geophysical measurements carried out from the surface or in well bores.

According to the technology of reflection seismology, these seismic measurements involve emitting a wave (e.g. acoustic waves) into the subsurface and measuring a signal comprising a plurality of echoes of the wave on geological structures being investigated. These structures are typically surfaces separating distinct materials, faults, etc. Other measurements may be carried out at wells bores.

Chrono-stratigraphic analysis (or sequence stratigraphic analysis) is very important to understand basin evolution, predict the sedimentary facies distribution for both hydrocarbon exploration and development. This analysis is based on the fundamental assumption that seismic reflectors are surfaces of chrono-stratigraphic significance. This assumption implies that an individual seismic reflector is a "time-line" through a depositional basin that represents a surface of the same geological age (i.e. an isochronous surface in geological time). An example of chrono-stratigraphic analysis is described by Tomas van Hoek et al., in "Geometric attributes for seismic stratigraphic interpretation", The Leading Edge, Vol. 29, No. 9 (pages 1056-1065).

A 2D seismic image (or seismic section) is formed by the juxtaposition in a plane of sampled one-dimensional signals referred to as seismic traces. Likewise, a 3D seismic image (or block) is formed by the juxtaposition of seismic traces in a volume. The expression "seismic image" refers either to a seismic cross section (2D) or a seismic block (3D).

In a seismic image, a pixel may be 2D in case of a 2D seismic image or 3D (voxel) in case of a 3D seismic image. The value of a pixel of a seismic image is proportional to the seismic amplitude represented by seismic traces.

Computing a chrono-stratigraphic representation of a seismic image often requires determining seismic horizon surfaces of the seismic image, wherein a seismic horizon surface corresponds to an estimated isochronous surface of the geological formation. Such seismic horizon surfaces can be used to determine an RGT image of the geological formation, i.e. an image in which each pixel provides an estimated geological age for the portion of the geological formation represented by said pixel. The RGT image is referred to as "relative" because the purpose of the RGT image is mainly to be able to compare the estimated geological ages of different pixels, in order to e.g. identify portions of the geological formation that have the same estimated geological age. Also, in practice, it is usually not possible to estimate an absolute geological age of any given portion of the geological formation.

[LOMASK2006] describes a method for determining seismic horizon surfaces based on a seismic image, by computing the local seismic dip at each pixel of the seismic image and searching iteratively for surfaces having local gradients approaching the local seismic dips.

However, seismic images have generally very large dimensions and represent a significant amount of data which may take a significant time to process, especially with an iterative scheme such as the one proposed by [LOMASK2006], and which may not always be directly compatible with e.g. the processing and memory capacities of existing graphical processing units, GPUs.

## SUMMARY

The present disclosure aims at improving the situation. In particular, the present disclosure aims at overcoming at least some of the limitations of the prior art discussed above, by proposing a solution for reducing the amount of data to be processed, while limiting the impact on the accuracy of the RGT images.

According to a first aspect, the present disclosure relates to a computer implemented method for processing a seismic image comprising seismic values obtained from seismic measurements performed on a geological formation, said seismic image comprising at least one horizontal dimension and one vertical dimension, said method comprising:

- determining a seismic dip image based on the seismic image, said seismic dip image comprising local seismic dips representative of the local gradient of the seismic values of the seismic image;
- decimating the seismic dip image by a decimating factor along at least one horizontal dimension in order to obtain a decimated seismic dip image;
- initializing decimated seismic horizon surfaces, said decimated seismic horizon surfaces using the same horizontal dimension as the decimated seismic dip image;

- iteratively modifying the decimated seismic horizon surfaces to progressively increase alignment between local orientations of each decimated seismic horizon surface and the corresponding local seismic dips of the decimated seismic dip image, said local orientations and/or local seismic dips being corrected by the decimating factor, until a predetermined stop criterion is satisfied;
- determining a relative geological time, RGT, image based on the decimated seismic horizon surfaces.

The proposed processing method iteratively modifies a seismic horizon surface in order to progressively align the local orientations of the seismic horizon surface with the local seismic dips of a seismic dip image.

The seismic dip image is computed based on the seismic image, i.e. by using the same resolution as the seismic image.

In order to reduce the amount of data to be used during the iterative scheme, the seismic dip image is then decimated by a predetermined decimating factor. The decimation takes place mainly on the horizontal dimensions of the seismic dip image, i.e. no decimation is performed along the vertical dimension of the seismic dip image or, if any, the decimating factor used along the vertical dimension is lower than the decimating factor(s) used for horizontal dimensions.

Such provisions are particularly advantageous in that:

- the local seismic dips are computed by using the full resolution of the seismic image, i.e. they are as accurate as they can be; and
- the resolution along the vertical dimension, of particular importance in the context of chrono-stratigraphic analysis, is not reduced.

Hence, the amount of data to be processed in the iterative scheme may be drastically reduced, thanks to the decimation, while limiting the impact on the accuracy of the RGT images computed since the computed local seismic dips are as accurate as they can be, and since the best resolution can be maintained where it actually matters the most, i.e. along the vertical dimension.

Due to the fact that the decimation of the seismic dip image is not the same for all the dimensions of the seismic dip image, the local seismic dips of the decimated seismic dip image do not compare directly with the local orientations of the decimated seismic horizon surfaces. In the present disclosure, the local seismic dips and/or the local orientations are corrected in order to make them directly comparable without impacting the accuracy of the RGT image computed.

In specific embodiments, the processing method can further comprise one or more of the following features, considered either alone or in any technically possible combination.

In specific embodiments, correcting by the decimating factor comprises multiplying the local seismic dips of the decimated seismic dip image by the decimating factor, thereby producing a corrected decimated seismic dip image used for all iterations.

In specific embodiments, correcting by the decimating factor comprises dividing local orientations of the decimated seismic horizon surface by the decimating factor, thereby producing corrected local orientations at each iteration.

In specific embodiments, determining the RGT image comprises:

- determining a decimated RGT image based on the decimated seismic horizon surfaces;
- interpolating the decimated RGT image to produce the RGT image.

Indeed, the inventors have found that better results in terms of accuracy can be obtained by interpolating the decimated RGT image instead of e.g. interpolating the decimated seismic horizon surfaces and determining the RGT image based on the interpolated seismic horizon surfaces. It is also more efficient in terms of computational complexity to interpolate a single decimated RGT image than to interpolate a large number of decimated seismic horizon surfaces.

In specific embodiments, determining the RGT image comprises, for each pixel of the RGT image, counting the number of decimated seismic horizon surfaces that comprise said considered pixel or any pixel located in the same column as the considered pixel between the considered pixel and a reference pixel in the same column.

In specific embodiments, the processing method comprises normalizing the RGT image by a predetermined reference geological age, such that the maximum value of the pixels of the RGT image is equal to the reference geological age.

In specific embodiments, the processing method comprises decimating the seismic image in order to obtain a decimated seismic image, and initializing the decimated seismic horizon surfaces comprises:

- selecting seismic traces of the decimated seismic image;
- identifying pixels of the selected seismic traces that correspond to local extrema of the seismic traces;

- for each of the identified pixels: defining a decimated seismic horizon surface comprising said identified pixel.

In specific embodiments, the decimated seismic horizon surface defined for an identified pixel is a horizontal surface comprising said identified pixel.

In specific embodiments, the selected seismic traces comprise seismic traces randomly selected in the decimated seismic image.

In specific embodiments, the selected seismic traces comprise regularly-spaced seismic traces of the decimated seismic image.

In specific embodiments, the evaluation of the alignment, between local orientations of a decimated seismic horizon surface and the corresponding local seismic dips of the decimated seismic dip image, disregards columns of the decimated seismic dip image which are mapped to columns of the seismic image for which no seismic trace is available and/or for which the seismic traces do not satisfy a predetermined quality criterion.

In specific embodiments, the processing method comprises decimating the seismic dip image along the vertical dimension with a decimating factor strictly lower than each decimating factor used along an horizontal dimension, and the correction of the local orientations and/or local seismic dips uses a decimating factor which corresponds to a ratio between a decimating factor used along an horizontal dimension and the decimating factor used along the vertical dimension.

According to a second aspect, the present disclosure relates to a computer program product comprising instructions which, when executed by at least one processor, configure said at least one processor to carry out a processing method according to any one of the embodiments of the present disclosure.

According to a third aspect, the present disclosure relates to a computer-readable storage medium comprising instructions which, when executed by at least one processor, configure said at least one processor to carry out a processing method according to any one of the embodiments of the present disclosure.

According to a fourth aspect, the present disclosure relates to a computer system for processing a seismic image, said computer system comprising at least one processor configured to carry out a processing method according to any one of the embodiments of the present disclosure.

## BRIEF DESCRIPTION OF DRAWINGS

The invention will be better understood upon reading the following description, given as an example that is in no way limiting, and made in reference to the figures which show:

- Figure 1: an example of seismic image;
- Figure 2: a flow chart illustrating the main steps of a method for processing a seismic image;
- Figure 3: a schematic representation of the local seismic dips of the seismic image of figure 1;
- Figure 4: a schematic representation of local seismic dips computed for respectively a seismic image and a decimated seismic image;
- Figure 5: charts illustrating the evolution of a seismic horizon surface when using the processing method of figure 2
- Figure 6: a flow chart illustrating the main steps of a processing method according to a preferred embodiment;
- Figure 7: a schematic representation of a vertical envelope of seismic traces in a rectangular cuboid represented by a seismic image.

In these figures, identical references from one figure to another designate identical or analogous elements. For reasons of clarity, the elements shown are not to scale, unless explicitly stated otherwise.

## DESCRIPTION OF EMBODIMENTS

As discussed above, the present disclosure relates inter alia to a method 30 for processing seismic images.

A seismic image represents a picture of the subsoil arising from a seismic exploration survey. The seismic image comprises at least two dimensions which may comprise at least one horizontal dimension (which usually uses a distance scale, expressed e.g. in meters) and one vertical dimension (which usually uses a distance scale or a time scale, expressed e.g. in seconds). Hence, the seismic image may correspond to a 3D seismic image (with two horizontal dimensions and one vertical dimension) or to a 2D seismic image (with one horizontal dimension and one vertical dimension).

It is emphasized that the expressions "horizontal dimension" and "vertical dimension" are not be interpreted as requiring these dimensions to be respectively strictly horizontal and strictly vertical. These expressions mean that one of the dimensions, referred to as "vertical dimension", is representative of the depth of the geological formation, and that the other dimensions, referred to as "horizontal dimensions" are both orthogonal to the vertical dimension.

The seismic image is composed of pixels which may be 2D in case of a 2D seismic image or 3D (voxels) in case of a 3D seismic image. The pixels are regularly distributed according to a horizontal resolution on each horizontal dimension and a vertical resolution on the vertical dimension. The seismic image comprises, along each horizontal dimension:

- a number of columns of pixels which is equal to the quotient of the horizontal extension along this horizontal dimension divided by the horizontal resolution along this horizontal dimension; each column of the seismic image may be referred to as "seismic trace"; and
- a number of pixels per column which is equal to the quotient of the vertical extension divided by the vertical resolution.

Each pixel is associated with a seismic value which may be a gray value, for instance between 0 and 255 (or 65535). Each seismic value is representative of the amplitude of the seismic signal measured for the portion of the geological formation represented by the corresponding pixel.

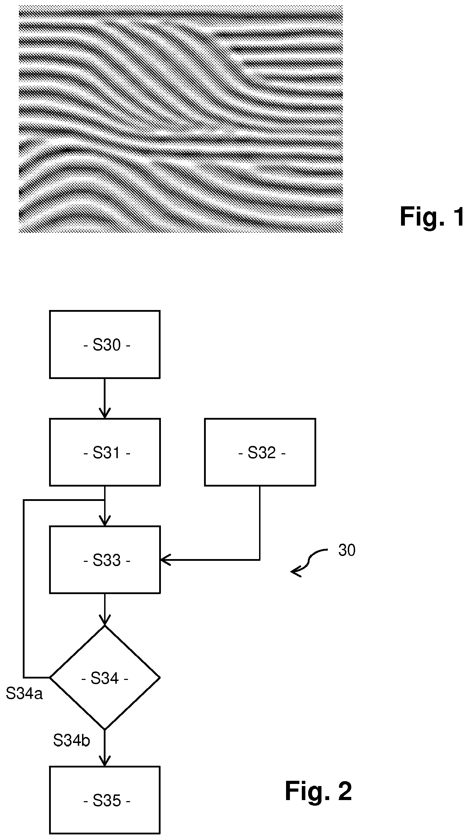

Figure 1 represents an example of seismic image. The seismic image represented by figure 1 is 2D and may correspond to a 2D seismic image or to a 2D section of a 3D seismic image, in a vertical plane comprising one of its horizontal dimensions. As can be seen in figure 1, the seismic values highlight the composition of the geological formation, since high amplitude seismic values are usually associated to strong seismic reflectors, which are usually located at the interfaces between geological layers having different acoustic impedances.

Figure 2 represents schematically the main steps of an exemplary embodiment of a method 30 for processing a seismic image.

The processing method 30 is carried out by a computer system (not represented in the figures). In preferred embodiments, the computer system comprises one or more processors (which may belong to a same computer or to different computers) and storage means (magnetic hard disk, optical disk, electronic memory, or any computer readable storage medium) in which a computer program product is stored, in the form of a set of program-code instructions to be executed in order to implement all or part of the steps of the processing method 30. Alternatively, or in combination thereof, the computer system can comprise one or more programmable logic circuits (FPGA, PLD, etc.), and/or one or more specialized integrated circuits (ASIC), etc., adapted for implementing all or part of said steps of the processing method 30. In other words, the computer system comprises a set of means configured by software (specific computer program product) and/or by hardware (processor, FPGA, PLD, ASIC, etc.) to implement the steps of the processing method 30.

As illustrated by figure 2, the processing method 30 comprises a step S30 of determining a seismic dip image based on the seismic image.

As the seismic image, the seismic dip image is composed of pixels, and each pixel of the seismic dip image is associated with a local seismic dip which is representative of the local gradient of the seismic values of the seismic image. Hence, each local seismic dip corresponds to a vector comprising all or part of the partial derivatives of the seismic values of the seismic image. By "local" seismic dip, we mean that the seismic dip computed is for a given pixel or a patch of adjacent pixels. Preferably, the step S30 of determining the seismic dip image comprises a step of computing the local gradients for the seismic image, and a step of performing a principal component analysis, PCA, on the local gradients.

In the sequel, we consider in a non-limitative manner that the seismic image is a 3D image.

We denote by $I_S(x, y, t)$ the seismic image, wherein $x$ and $y$ correspond to the horizontal dimensions and $t$ corresponds to the vertical dimension. Using a discrete formulation, and assuming that the seismic image comprises $N_x$ pixels along the horizontal dimension $x$, $N_y$ pixels along the horizontal dimension y and $Nt$ pixels in each column along the vertical dimension $t$, then the seismic image $I_S$ corresponds to the set of pixels $\{I_S(i, j, k), 1 \le i \le N_x, 1 \le j \le N_y, 1 \le k \le N_t\}$. By convention, the pixels of index $Nt$ along the vertical dimension $t$ correspond to the pixels representing the deepest portions of the geological formation.

Similarly, the seismic dip image $I_D$ corresponds to the set of local seismic dips $\{I_D(i, j, k), 1 \le i \le N_x, 1 \le j \le N_y, 1 \le k \le N_t\}$, wherein $I_D(i, j, k)$ is local seismic dip computed for the pixel $I_S(i, j, k)$. As discussed above, the local seismic dip $I_D(i, j, k)$ corresponds to a vector, and it preferably comprises at least the partial derivatives of the seismic values of the seismic image along each horizontal dimension. For instance, $I_D(i, j, k) = \{b(i,j, k), q(i,j, k)\}$, wherein b is the local seismic dip in the horizontal dimension $x$ and $q$ is the local seismic dip in the horizontal dimension $y$.

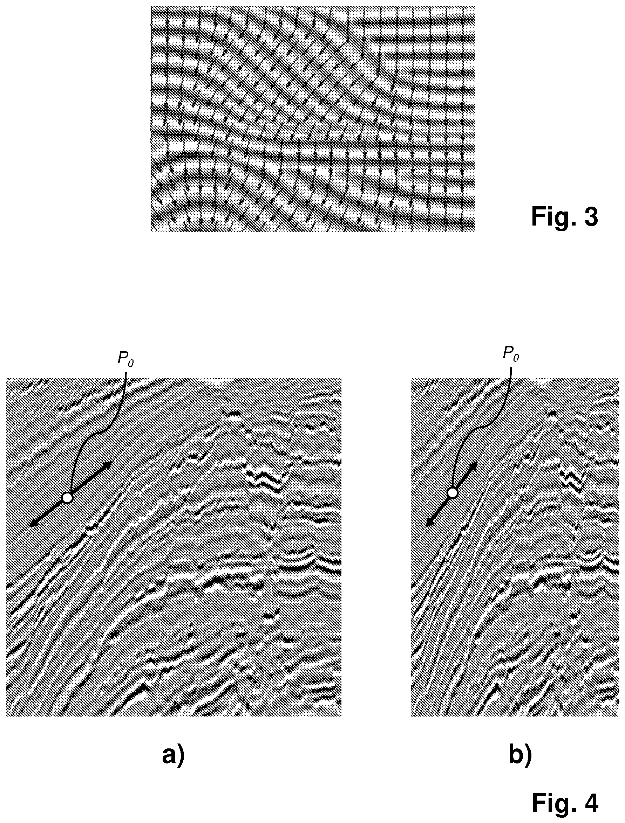

Figure 3 represents schematically, superimposed on the seismic image, the local seismic dips computed (along one horizontal dimension) for the seismic image of figure 1 for different positions within the seismic image. More specifically, figure 3 represents the vectors normal to the local seismic dips, for clarity purposes, which is equivalent to the local seismic dip itself.

The processing method 30 comprises also a step S31 of decimating the seismic dip image $I_D$ by a decimating factor along at least one horizontal dimension in order to obtain a decimated seismic dip image $I_{DD}$. It is possible to use the same decimating factor for each horizontal dimension, or to use different decimating factors associated respectively to each horizontal dimension. In the sequel, we consider in a non-limitative manner that a same decimating factor, denoted $K_H$, is used for both horizontal dimensions. We also consider in a non-limitative manner that no decimation is performed along the vertical dimension.

Basically, the step S31 of decimating consists in discarding columns of pixels of the seismic dip image. More specifically, in the horizontal dimensions, only one column of pixels out of $K_H$ is kept. For instance, assuming that $N_x$ and $N_y$ are multiples of $K_H$, the decimated seismic dip image $I_{DD}$ corresponds to the set of local seismic dips $\{I_{DD}(i', j', k), 1 \leq i' \leq N_x/K_{H'}, 1 \leq j' \leq N_y/K_H, 1 \leq k \leq N_t\}$, if no decimation is performed along the vertical dimension. For instance:

$$I_{DD}(i', j', k) = I_D\big((i' \times K_H - n_0), (j' \times K_H - n_0), k\big)$$

wherein $0 \leq n_0 \leq (K_H - 1)$ is a predefined reference index, preferably equal to 0.

Hence, in this example, the number of columns has been reduced by a factor $(K_H)^2$ in the decimated seismic dip image, and the decimated seismic dip image represents a significantly lower amount of data to be processed.

It should be noted that it is also possible, in some examples, to perform a decimation along the vertical dimension to further reduce the amount of data to be processed. However, in such a case, the decimating factor used along the vertical dimension is lower than each decimating factor used along the horizontal dimensions, in order to avoid reducing too much the resolution along the vertical dimension which is of particular interest in chrono-stratigraphic analysis.

Figure 4 represents schematically a 2D representation of a seismic image (i.e. the seismic image itself if it is a 2D seismic image or a 2D section in a vertical plane if it is a 3D seismic image).

More specifically, part a) of figure 4 represents schematically the seismic image and part b) represents schematically a decimated seismic image by applying a decimation in the horizontal dimension only. Part a) and part b) both represent the local seismic dip at a given point $P_0$, computed based on respectively the seismic image and the decimated seismic image. As can be seen in figure 4, the local seismic dips are different, due to the decimation applied. Hence, it is emphasized that the local seismic dips $\{b(i', j', k), q(i', j', k)\}$ of the decimated seismic dip image $I_{DD}$ are not equal the local seismic dips $\{b'(i', j', k), q'(i', j', k)\}$ that would be computed based on a decimated seismic image, due to the fact that the decimation is not the same on all dimensions (i.e. no decimation along the vertical dimension, or with a lower decimating factor). These differences between the local seismic dips $\{b(i', j', k), q(i', j', k)\}$ of the decimated seismic dip image $I_{DD}$, computed based on the seismic image $I_S$, and the local seismic dips $\{b'(i', j', k), q'(i', j', k)\}$ that would be computed based on a decimated seismic image, will have to be compensated for at some point, as discussed hereinbelow. However, the local seismic dips $\{b'(i', j', k), q'(i', j', k)\}$ that would be computed based on a decimated seismic image are such that:

$$b'(i', j', k) \approx K_H \times b(i', j', k)$$

$$q'(i', j', k) \approx K_H \times q(i', j', k)$$

The processing method 30 comprises also a step S32 of initializing decimated seismic horizon surfaces. It is emphasized that a seismic horizon surface is referred to as "decimated" to emphasize that it uses the same horizontal grid ($N_x/K_H \times N_y/K_H$ in the present example) as the decimated seismic dip image. Hence the expression "decimated seismic horizon surface" does not imply performing a decimation on a seismic horizon surface.

For instance, it is possible to initialize a number $M_h$ of decimated seismic horizon surfaces. For instance, each decimated seismic horizon surface may be initialized as a horizontal surface passing by a predetermined pixel in the decimated seismic dip image. Preferably, different decimated seismic surfaces are initialized for different pixels having different respective vertical positions.

In the sequel, for a given pixel of the seismic horizon surface, we designate by "local orientation" of the decimated seismic horizon surface the direction that is locally tangent to said decimated seismic horizon surface. Of course, the local orientation may be equivalently defined by a vector normal to said local tangent.

Then, and as can be seen in figure 2, the processing method 30 comprises, for each decimated seismic horizon surface, a step S33 of modifying the decimated seismic horizon surface. During step S33, each decimated seismic horizon surface is modified in order to increase alignment between local orientations of the decimated seismic horizon surface and the corresponding local seismic dips of the decimated seismic dip image. A local orientation of the decimated seismic horizon surface and the corresponding local seismic dip are considered "aligned" when they are parallel.

The processing method 30 comprises also a step S34 of evaluating a predetermined stop criterion. If the stop criterion is not satisfied (reference S34a in figure 2), then the step S33 of modifying the decimated seismic horizon surface is executed again, to further increase alignment between local orientations of the decimated seismic horizon surface and the corresponding local seismic dips of the decimated seismic dip image. If the stop criterion is satisfied (reference S34b in figure 2), then the processing method 30 may stop for the considered decimated seismic horizon surface. In other words, each decimated seismic horizon surface is iteratively modified to progressively increase alignment between local orientations of the decimated seismic horizon surface and the corresponding local seismic dips, until the stop criterion is satisfied for said decimated seismic horizon surface.

When the stop criterion is satisfied, each local orientation of the decimated seismic horizon surface should be in principle substantially parallel with the corresponding local seismic dip of the decimated seismic dip image. In other words, when the stop criterion is satisfied, the decimated seismic horizon surface should be in principle substantially locally tangent to each local seismic dip.

In practice, any suitable stop criterion may be used, and the choice of a specific stop criterion corresponds to a specific embodiment of the present disclosure. For instance, the stop criterion may be considered satisfied when the decimated seismic horizon surface may be considered to remain substantially unchanged from one iteration to another, or when the number of iterations reaches a predetermined maximum number of iterations, etc.

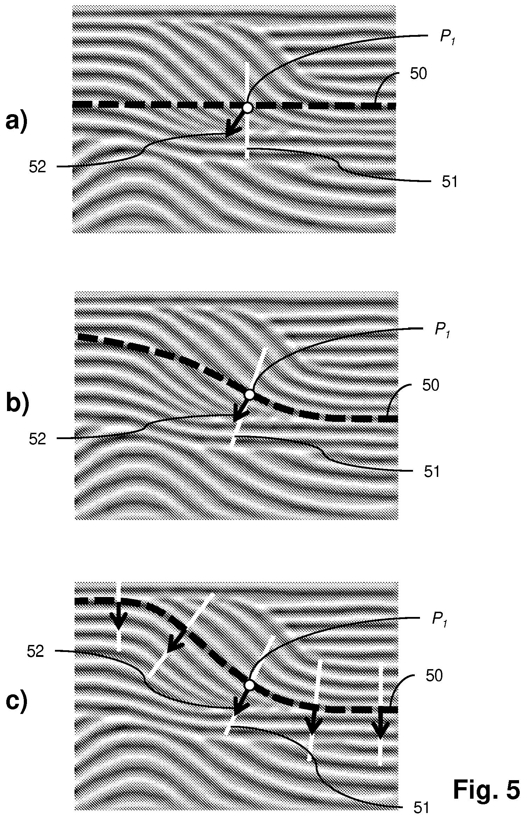

Figure 5 represents schematically the evolution of a seismic horizon surface during successive iterations of step S33.

As can be seen in part a) of figure 5, a decimated seismic horizon surface 50 (represented as a black dashed line) is initially substantially horizontal. Part a) of figure 5 represents also a vector 51 (represented as a white line) at a point $P_1$ that is normal to the local orientation of the decimated seismic horizon surface 50. Since the local orientation of the decimated seismic horizon surface 50 is substantially horizontal, the normal vector 51 is substantially vertical. Part a) of figure 5 represents also a vector 52 (represented as a black arrow) that is normal to the local seismic dip computed at point $P_1$, which is slanted.

Part b) of figure 5 represents the decimated seismic horizon surface 50 obtained after one or more iterations of step S33 from the decimated seismic horizon surface 50 of part a) of figure 5. As can be seen in part b) of figure 5, the decimated seismic horizon surface 50 has been modified in order to increase alignment between the local orientations of the seismic horizon surface and local seismic dips, including between the local orientation and the local seismic dip computed at point $P_1$ of the seismic horizon surface 50, since the alignment between the normal vectors 51 and 52 has been increased.

Part c) of figure 5 represents the decimated seismic horizon surface 50 obtained after one or more iterations of step S33 from the seismic horizon surface 50 of part b) of figure 5. As can be seen in part c) of figure 5, the obtained decimated seismic horizon surface 50 is such that local orientations and local seismic dips are substantially aligned at each point of the seismic decimated horizon surface, including at point $P_1$. At this stage, the stop criterion may be considered satisfied and the iterations of step S33 may stop.

One possible method, for determining one or more seismic horizon surfaces having local orientations substantially aligned with the local seismic dips, is known from [LOMASK2006]. Basically, in the method proposed in [LOMASK2006], a Euler-Lagrange equation is used to iteratively find the seismic horizon surface $\tau(x, y)$ that minimizes an energy function $J(\tau)$:

$$J(\tau) = \iint F(x, y, \tau, \tau_x, \tau_y) dx dy$$

expression in which $\tau_x$ and $\tau_y$ are the partial derivatives of $\tau$ in the $x$ and y horizontal dimensions, i.e. respectively $\partial \tau / \partial x$ and $\partial \tau / \partial y$. According to a non-limitative example, the function $F$ may be given by:

$$F = \left( b(x, y, \tau) - \tau_x(x, y) \right)^2 + \left( q(x, y, \tau) - \tau_y(x, y) \right)^2$$

expression in which $b$ is the local seismic dip in the $x$ horizontal dimension and q is the local seismic dip in the $y$ horizontal dimension.

Regardless the method used, increasing the alignment between the local orientations of a seismic horizon surface and the corresponding local seismic dips may be seen as optimizing an energy function $J(\tau)$ as the one presented above.

If we reformulate the previous expressions using a discrete formulation and the definitions introduced above, we get:

$$J(\tau) = \sum_{i'} \sum_{j'} F(i', j', \tau, \tau_x, \tau_y)$$

wherein the function F may be given by:

$$F = \left(b'\big(i',j',\tau(i',j')\big) - \tau_x(i',j')\right)^2 + \left(q'\big(i',j',\tau(i',j')\big) - \tau_y(i',j')\right)^2$$

As discussed above, the local seismic dips $\{b'(i', j', k), q'(i', j', k)\}$ are those that would be computed based on a decimated seismic image, while the available local seismic dips $\{b(i', j', k), q(i', j', k)\}$ are those obtained by decimating the seismic dip image computed based on the seismic image $I_S$. However, we can assume that:

$$b'(i',j',k) \approx K_H \times b(i',j',k)$$

$$q'(i',j',k) \approx K_H \times q(i',j',k)$$

Hence, this needs to be taken into account when computing the function $F$ based on the local seismic dips $\{b(i', j', k), q(i', j', k)\}$, and it is necessary to compensate for the decimation performed by correcting the local orientations of the decimated seismic horizon surface and/or the local seismic dips $\{b(i', j', k), q(i', j', k)\}$ computed based on the seismic image.

According to a first non-limitative example, correcting by the decimating factor comprises multiplying the local seismic dips $\{b(i', j', k), q(i', j', k)\}$ by the decimating factor $K_H$:

$$F = \left(K_H \times b\big(i',j',\tau(i',j')\big) - \tau_x(i',j')\right)^2 + \left(K_H \times q\big(i',j',\tau(i',j')\big) - \tau_y(i',j')\right)^2$$

wherein $\tau_x(i', j')$ and $\tau_y(i', j')$ may for instance be computed as respectively $(\tau(i' + 1, j') - \tau(i', j'))$ and $(\tau(i', j' + 1) - \tau(i', j'))$.

Such a correction may be applied once for all, by computing a corrected seismic dip image that may be used for all iterations and for all the decimated seismic horizon surfaces.

According to a second non-limitative example, correcting by the decimating factor comprises dividing the local orientations $\{\tau_x(i', j'), \tau_y(i', j')\}$ of the decimated seismic horizon surface by the decimating factor $K_H$:

$$F = \left(b\big(i',j',\tau(i',j')\big) - \tau_x(i',j')/K_H\right)^2 + \left(q\big(i',j',\tau(i',j')\big) - \tau_y(i',j')/K_H\right)^2$$

Such a correction needs to be applied at each iteration and for each decimated seismic horizon surface.

Also, it is possible to combine the previous examples. Indeed, the first example cannot be used as such if different decimating factors $K_x$ and $K_y$ are used respectively for the horizontal dimensions $x$ and $y$. However, it is possible to combine both approaches. For instance, if we assume that $K_x > K_y$ then it is possible to distribute the correction by multiplying the local seismic dips $\{b(i', j', k), q(i', j', k)\}$ by the decimating factor $K_y$ and by dividing only the local orientation $\tau_x(i', j)$ by a decimating factor $K_x/K_y$.

When the stop criterion is satisfied for each decimated seismic horizon surface, then we have $M_h$ decimated seismic horizon surfaces $\tau^n$ ($1 \leq n \leq M_h$) having local orientations substantially aligned with the local seismic dips $\{b'(i', j', k), q'(i', j', k)\}$ that would be computed for a decimated seismic image.

Then, the processing method 30 comprises a step S35 of determining a relative geological time, RGT, image based on the $M_h$ decimated seismic horizon surfaces. The RGT image computed may use the same horizontal grid as the decimated seismic dip image. However, preferably, the RGT image has a resolution along each horizontal dimension that is higher than the corresponding resolution of the decimated seismic dip image. For instance, the RGT image has the same resolution as the original seismic image $I_S$, i.e. it comprises $N_x \times N_y \times N_t$ pixels.

In preferred embodiments, determining the RGT image comprises:

- determining a decimated RGT image based on the decimated seismic horizon surfaces;
- interpolating the decimated RGT image to produce the RGT image.

However, it is emphasized that it is also possible, in other examples, to interpolate the decimated seismic horizon surfaces and to compute the RGT image based on the interpolated decimated seismic horizon surfaces.

In the sequel, we consider in a non-limitative manner that a decimated RGT image $RGT_d$ is computed based on the decimated seismic horizon surfaces, and then interpolated to produce an RGT image $RGT_{fr}$. It is emphasized that the RGT image $RGT_d$ is referred to as "decimated" to emphasize that it uses the same horizontal grid ($N_x/K_H \times N_y/K_H$ in the present example) as the decimated seismic dip image. Hence the expression "decimated RGT image $RGT_d$" does not imply performing a decimation on an RGT image.

For example, the value of each pixel of the RGT image $RGT_d$ may correspond to the number of decimated seismic horizon surfaces that comprise said considered pixel or that comprise any pixel located in the same column as the considered pixel, between the considered pixel and a reference pixel in the same column. The reference pixel on the vertical axis is the pixel of index $k = N_t$ or, preferably, the pixel of index $k = 1$.

For instance, it is possible to compute a stack image $STK$. The value of each pixel of the stack image $STK$ corresponds to the number of decimated seismic horizon surfaces that comprise said considered pixel. We can define a function $Pos(i', j', k, n)$ which is such that:

$$Pos(i', j', k, n) = \begin{cases} 1 \text{ if } \tau^n(i', j') = k \\ 0 \text{ if } \tau^n(i', j') \neq k \end{cases}$$

Hence, the function $Pos(i', j', k, n)$ indicates whether the decimated seismic horizon surface $\tau^n$ passes by the pixel having the position $(i', j', k)$. Based on the function $Pos(i', j', k, n)$, the stack image $STK$ may be computed as follows:

$$STK(i', j', k) = \sum_{n=1}^{M_h} Pos(i', j', k, n)$$

for each $1 \leq i' \leq N_x/K_H$, $1 \leq j' \leq N_y/K_H$, $1 \leq k \leq Nt$.

Then, assuming that the reference pixel is the pixel of index $k = 1$, the decimated RGT image $RGT_d$ may be computed as follows:

$$RGT_d(i', j', k) = \sum_{l=1}^{k} STK(i', j', l)$$

for each $1 \leq i' \leq N_x/K_H$, $1 \leq j' \leq N_y/K_H$, $1 \leq k \leq N_t$.

Then the RGT image $RGT_{fr}$ may be computed by interpolating the decimated RGT image $RGT_d$. This interpolation may use any 3D interpolation method known to the skilled person, and the choice of a specific 3D interpolation method corresponds to a specific embodiment of the present disclosure.

As it is constructed, the decimated RGT image $RGT_d$ is such that $RGT_d(i', j', N_t) = M_h$ for all values of the index $i'$ and for all values of the index $j'$. The same holds also, in the present case, for the RGT image $RGT_{fr}$. For the purpose of chrono-stratigraphic analysis, it is possible, in some embodiments, to normalize the RGT image $RGT_{fr}$ by a predetermined reference geological age, such that the maximum value of the pixels of the RGT image $RGT_{fr}$ is equal to the reference geological age. Hence, in the present example, the pixels which represent the deepest portions of the geological formation, at least, will have their values equal to the reference geological age.

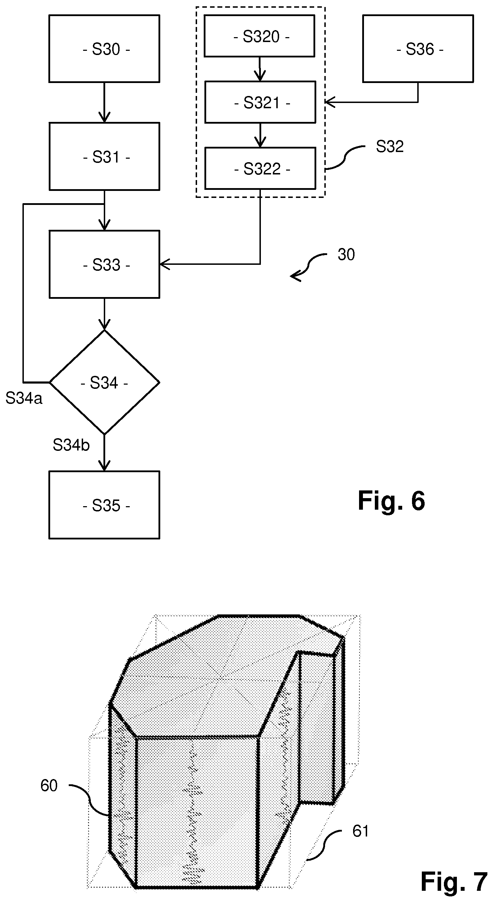

Figure 6 represents schematically the main steps of a preferred embodiment of the processing method 30.

As can be seen in figure 6, the processing method 30 comprises all the steps discussed hereinabove in relation with figure 2.

Also, the processing method 30 comprises a step S36 of decimating the seismic image to obtain a decimated seismic image. The step S36 of decimating is identical to the step S31 of decimating but is applied to the seismic image instead of the seismic dip image.

As can be seen in figure 6, the step S32 of initializing the decimated seismic horizon surfaces comprises:

- a step S320 of selecting seismic traces of the decimated seismic image;
- a step S321 of identifying pixels of the selected seismic traces that correspond to local extrema of the seismic traces;
- for each of the identified pixels: a step S322 of defining a decimated seismic horizon surface comprising said identified pixel.

During step S320, a plurality of seismic traces (i.e. columns) of the decimated seismic image are selected. For instance, the seismic traces to be used may be selected (pseudo-)randomly in the decimated seismic image and/or in a deterministic manner, e.g. as regularly spaced apart seismic traces.

It should be noted that, in the seismic image (and in the decimated seismic image), it is possible that the pixels of some of the columns have undefined values. Indeed, when performing a seismic exploration survey, it is not always possible or necessary to measure seismic traces for any possible position at the surface. Usually, the seismic traces are measured for positions that are located in a predetermined area at the surface, such that the seismic traces measured can all be considered to lie inside a vertical envelope defined by projecting said predetermined area along the vertical dimension.

Figure 7 represents schematically an example of vertical envelope 60. As can be seen in figure 7, the volume defined by the vertical envelope 60 is not a rectangular cuboid. Of course, the seismic image (and the decimated seismic image) represents preferably a rectangular cuboid 61, such that the pixels of some of the columns of the seismic image may have undefined values because no seismic trace is available for these columns. In such a case, all the selected seismic traces are preferably seismic traces located inside the vertical envelope. For instance, the seismic traces may be selected (pseudo-)randomly inside the vertical envelope and/or in a deterministic manner as regularly spaced apart seismic traces inside the vertical envelope.

It should be noted that, when the decimated seismic image has such columns of pixels with undefined values, then these columns are preferably disregarded when evaluating the alignment between local orientations of a decimated seismic horizon surface and the corresponding local seismic dips of the decimated seismic dip image. For instance, this may be done by not considering in the energy function $J(\tau)$ the indexes $i'$ and $j'$ for which no seismic trace is available:

$$J(\tau) = \sum_{(i',j') \in S_{def}} F(i', j', \tau, \tau_x, \tau_y)$$

wherein $S_{def}$ is the set of positions $(i', j')$ in the horizontal grid for which there exist seismic traces. It should be noted that this can be applied regardless how the seismic traces are selected and how the decimated seismic horizon surfaces are initialized. Indeed, the local seismic dips computed for such columns with pixels having undefined values are necessarily irrelevant and may be not computed at all, such that they should not be taken into account for iteratively modifying the decimated seismic horizon surfaces. The same may also be applied for seismic traces that do not satisfy a predetermined quality criterion. For instance, the predetermined quality criterion may be considered satisfied for a seismic trace if the signal to noise ratio, SNR, of said seismic trace is above a predetermined threshold.

As illustrated by figure 6, when the seismic traces have been selected, then the step S32 of initializing the decimated seismic horizon surfaces may comprise a step S321 of identifying pixels of the selected seismic traces that correspond to local extrema of the seismic traces. For instance, the identified pixels correspond only to local minima of the selected seismic traces, or only to local maxima of the selected seismic traces or, preferably, to both local minima and local maxima of the selected seismic traces. Also, the identified pixels correspond preferably to all the local extrema considered (local minima or local maxima or both). In other embodiments, the identified pixels may correspond to a subset of the local extrema considered (local minima or local maxima or both), for instance the subset comprising the most significant local extrema (e.g. those having an absolute value higher than a predetermined threshold).

Then, during step S322, a decimated seismic horizon surface is defined for each identified pixel. For instance, the decimated seismic horizon surface defined for an identified pixel is a surface comprising said identified pixel, preferably a horizontal surface comprising said identified pixel.

For instance, the present disclosure has been given by considering mainly the case where no decimation is performed along the vertical dimension, and the case where the same decimating factor is used for both horizontal dimensions. However, it is also possible to use different decimating factors along the horizontal dimensions, and to perform a decimation along the vertical dimension. For instance, if we designate by $K_x$ the decimating factor along the horizontal dimension $x$, by $K_y$ the decimating factor along the horizontal dimension $y$ and by $K_t$ the decimating factor along the vertical dimension $t$, with $Kt < K_x$ and $Kt < K_y$ (and preferably $2 \times K_t \leq K_x$ and $2 \times K_t \leq K_y$), then the correction may be performed by considering the following decimating factors:

- $K_x' = K_x/K_t$ along the horizontal dimension $x$;

- $K_y' = K_y/K_t$ along the horizontal dimension $y$.

## REFERENCES

[LOMASK2006] Lomask, et al.: "Flattening without picking" Geophysics Volume 71 Issue 4 (July-August 2006), Pages 13-20.

## Claims

**1.** - Computer implemented method (30) for processing a seismic image comprising seismic values obtained from seismic measurements performed on a geological formation, said seismic image comprising at least one horizontal dimension and one vertical dimension, said method comprising:

- (S30) determining a seismic dip image based on the seismic image, said seismic dip image comprising local seismic dips representative of the local gradient of the seismic values of the seismic image;
- (S31) decimating the seismic dip image by a decimating factor along at least one horizontal dimension in order to obtain a decimated seismic dip image;
- (S32) initializing decimated seismic horizon surfaces, said decimated seismic horizon surfaces corresponding to seismic horizon surfaces using the same horizontal dimension as the decimated seismic dip image;
- (S33) iteratively modifying the decimated seismic horizon surfaces to progressively increase alignment between local orientations of each decimated seismic horizon surface and the corresponding local seismic dips of the decimated seismic dip image, said local orientations and/or local seismic dips being corrected by the decimating factor, until a predetermined stop criterion is satisfied;
- (S35) determining a relative geological time, RGT, image based on the decimated seismic horizon surfaces.

2. - Method (30) according to claim 1, wherein correcting by the decimating factor comprises multiplying the local seismic dips of the decimated seismic dip image by the decimating factor, thereby producing a corrected decimated seismic dip image used for all iterations.

3. - Method (30) according to claim 1 or 2, wherein correcting by the decimating factor comprises dividing local orientations of the decimated seismic horizon surface by the decimating factor, thereby producing corrected local orientations at each iteration.

4. - Method (30) according to any one of the previous claims, comprising decimating the seismic dip image along the vertical dimension with a decimating factor strictly lower than each decimating factor used along an horizontal dimension, and wherein the correction of the local orientations and/or local seismic dips uses a decimating factor which corresponds to a ratio between a decimating factor used along an horizontal dimension and the decimating factor used along the vertical dimension.

5. - Method (30) according to any one of the preceding claims, wherein determining the RGT image comprises:

- determining a decimated RGT image based on the decimated seismic horizon surfaces;
- interpolating the decimated RGT image to produce the RGT image.

6. - Method (30) according to any one of the previous claims, wherein determining the RGT image comprises, for each pixel of the RGT image, counting the number of decimated seismic horizon surfaces that comprise said considered pixel or any pixel located on a same column as the considered pixel between the considered pixel and a reference pixel in the same column.

7. - Method (30) according to any one of the previous claims, comprising normalizing the RGT image by a predetermined reference geological age, such that the maximum value of the pixels of the RGT image is equal to the reference geological age.

8. - Method (30) according to any one of the preceding claims, comprising decimating also the seismic image in order to obtain a decimated seismic image, and wherein initializing the decimated seismic horizon surfaces comprises:

- (S320) selecting seismic traces of the decimated seismic image;
- (S321) identifying pixels of the selected seismic traces that correspond to local extrema of the selected seismic traces;
- for each of the identified pixels: (S322) defining a decimated seismic horizon surface comprising said identified pixel.

9. - Method (30) according to claim 8, wherein the decimated seismic horizon surface defined for an identified pixel is a horizontal surface comprising said identified pixel.

10. - Method (30) according to claim 8 or 9, wherein the selected seismic traces comprise seismic traces randomly selected in the decimated seismic image.

11. - Method (30) according to any one of claims 8 to 10, wherein the selected seismic traces comprise regularly-spaced seismic traces of the decimated seismic image.

12. - Method (30) according to any one of the preceding claims, wherein the evaluation of the alignment, between local orientations of a decimated seismic horizon surface and the corresponding local seismic dips of the decimated seismic dip image, disregards columns of the decimated seismic dip image which are mapped to columns of the seismic image for which no seismic trace is available and/or for which the seismic traces do not satisfy a predetermined quality criterion.

13. - Computer program product comprising instructions which, when executed by at least one processor, configure said at least one processor to carry out a processing method (30) according to any one of the preceding claims.

14. - Computer-readable storage medium comprising instructions which, when executed by at least one processor, configure said at least one processor to carry out a processing method (30) according to any one of claims 1 to 12.

15. - Computer system for processing a seismic image, said computer system comprising at least one processor configured to carry out a processing method (30) according to any one of claims 1 to 12.

**Patentansprüche**

1. Computerimplementiertes Verfahren (30) zum Verarbeiten eines seismischen Bildes, das seismische Werte umfasst, die aus seismischen Messungen erhalten werden, die an einer geologischen Formation durchgeführt werden, wobei das seismische Bild mindestens eine horizontale Dimension und eine vertikale Dimension umfasst, das Verfahren umfassend:

   - (S30) Bestimmen eines seismischen Tiefenbildes auf Basis des seismischen Bildes, wobei das seismische Tiefenbild lokale seismische Tiefen umfasst, die kennzeichnend für den lokalen Gradienten des seismischen Wertes des seismischen Bildes sind;
   - (S31) Dezimieren des seismischen Tiefenbildes um einen Dezimierungsfaktor entlang mindestens einer horizontalen Dimension, um ein dezimiertes seismisches Tiefenbild zu erhalten;
   - (S32) Initialisieren von dezimierten seismischen Horizontflächen, wobei die dezimierten seismischen Horizontflächen seismischen Horizontflächen entsprechen, die die gleiche horizontale Dimension verwenden wie das dezimierte seismische Tiefenbild;
   - (S33) iteratives Verändern der dezimierten seismischen Horizontflächen, um eine Ausrichtung zwischen lokalen Orientierungen jeder dezimierten seismischen Horizontfläche und den entsprechenden lokalen seismischen Tiefen des dezimierten seismischen Tiefenbildes schrittweise zu erhöhen, wobei die lokalen Orientierungen und/oder lokalen seismischen Tiefen durch den Dezimierungsfaktor korrigiert werden, bis ein vorherbestimmtes Stoppkriterium erfüllt ist;
   - (S35) Bestimmen eines Bildes einer relativen geologischen Zeit, RGT, auf Basis der dezimierten seismischen Horizontflächen.

2. Verfahren (30) nach Anspruch 1, wobei das Korrigieren um den Dezimierungsfaktor das Multiplizieren der lokalen seismischen Tiefen des dezimierten seismischen Tiefenbildes um den Dezimierungsfaktor umfasst, wodurch ein korrigiertes dezimiertes seismisches Tiefenbild hervorgebracht wird, das für alle Iterationen verwendet wird.

3. Verfahren (30) nach Anspruch 1 oder 2, wobei das Korrigieren um den Dezimierungsfaktor das Dividieren lokaler Orientierungen der dezimierten seismischen Horizontfläche um den Dezimierungsfaktor umfasst, wodurch korrigierte lokale Orientierungen bei jeder Iteration hervorgebracht werden.

4. Verfahren (30) nach einem der vorherigen Ansprüche, umfassend das Dezimieren des seismischen Tiefenbildes entlang der vertikalen Dimension mit einem Dezimierungsfaktor, der strikt niedriger ist als jeder entlang einer horizontalen Dimension verwendete Dezimierungsfaktor, und wobei die Korrektur der lokalen Orientierungen und/oder lokalen seismischen Tiefen einen Dezimierungsfaktor verwendet, der einem Verhältnis zwischen einem entlang einer horizontalen Dimension verwendeten Dezimierungsfaktor und einem entlang der vertikalen Dimension verwendeten Dezimierungsfaktor entspricht.

5. Verfahren (30) nach einem der vorhergehenden Ansprüche, wobei das Bestimmen des RGT-Bildes Folgendes umfasst:

- Bestimmen eines dezimierten RGT-Bildes auf Basis der dezimierten seismischen Horizontflächen;
- Interpolieren des dezimierten RGT-Bildes, um das RGT-Bild hervorzubringen.

**6.** Verfahren (30) nach einem der vorherigen Ansprüche, wobei das Bestimmen des RGT-Bildes für jedes Pixel des RGT-Bildes das Zählen der Anzahl von dezimierten seismischen Horizontflächen umfasst, die das betrachtete Pixel oder irgendein Pixel, das sich auf einer gleichen Spalte wie das betrachtete Pixel befindet, zwischen dem betrachteten Pixel und einem Referenzpixel in derselben Spalte umfassen.

**7.** Verfahren (30) nach einem der vorherigen Ansprüche, umfassend das Normalisieren des RGT-Bildes um ein vorherbestimmtes geologisches Referenzalter, sodass der maximale Wert der Pixel des RGT-Bildes gleich dem geologischen Referenzalter ist.

**8.** Verfahren (30) nach einem der vorhergehenden Ansprüche, umfassend das Dezimieren auch des seismischen Bildes, um ein dezimiertes seismisches Bild zu erhalten und wobei das Initialisieren der dezimierten seismischen Horizontflächen Folgendes umfasst:

- (S320) Auswählen von seismischen Spuren des dezimierten seismischen Bildes;
- (S321) Identifizieren von Pixeln der ausgewählten seismischen Spuren, die dem lokalen Extremwert der ausgewählten seismischen Spuren entsprechen;
- für jedes der identifizierten Pixel: (S322) Definieren einer dezimierten seismischen Horizontfläche, die das identifizierte Pixel umfasst.

**9.** Verfahren (30) nach Anspruch 8, wobei die dezimierte seismische Horizontfläche, die für ein identifiziertes Pixel definiert ist, eine Horizontfläche ist, die das identifizierte Pixel umfasst.

**10.** Verfahren (30) nach Anspruch 8 oder 9, wobei die ausgewählten seismischen Spuren seismische Spuren umfassen, die zufällig in dem dezimierten seismischen Bild ausgewählt sind.

**11.** Verfahren (30) nach einem der Ansprüche 8 bis 10, wobei die ausgewählten seismischen Spuren regelmäßig beabstandete seismische Spuren des dezimierten seismischen Bildes umfassen.

**12.** Verfahren (30) nach einem der vorhergehenden Ansprüche, wobei die Bewertung der Ausrichtung zwischen lokalen Orientierungen einer dezimierten seismischen Horizontfläche und den entsprechenden lokalen seismischen Tiefen des dezimierten seismischen Tiefenbildes Spalten des dezimierten seismischen Tiefenbildes vernachlässigt, die Spalten des seismischen Bildes zugeordnet sind, für die keine seismische Spur verfügbar ist und/oder für die die seismischen Spuren ein vorherbestimmtes Qualitätskriterium nicht erfüllen.

**13.** Computerprogrammprodukt, das Anweisungen umfasst, die bei ihrer Ausführung durch mindestens einen Prozessor den mindestens einen Prozessor dazu konfigurieren, ein Verarbeitungsverfahren (30) nach einem der vorhergehenden Ansprüche durchzuführen.

**14.** Computerlesbares Speichermedium, das Anweisungen umfasst, die bei ihrer Ausführung durch mindestens einen Prozessor den mindestens einen Prozessor dazu konfigurieren, ein Verarbeitungsverfahren (30) nach einem der Ansprüche 1 bis 12 durchzuführen.

**15.** Computersystem zum Verarbeiten eines seismischen Bildes, wobei das Computersystem mindestens einen Prozessor umfasst, wobei der mindestens eine Prozessor dazu konfiguriert ist, ein Verarbeitungsverfahren (30) nach einem der Ansprüche 1 bis 12 durchzuführen.

**Revendications**

**1.** Procédé (30) mis en œuvre par ordinateur pour traiter une image sismique comprenant des valeurs sismiques obtenues à partir de mesures sismiques réalisées sur une formation géologique, ladite image sismique comprenant au moins une dimension horizontale et une dimension verticale, ledit procédé comprenant :

- (S30) la détermination d'une image d'inclinaison sismique sur la base de l'image sismique, ladite image d'inclinaison sismique comprenant des inclinaisons sismiques locales représentatives du gradient local des valeurs sismiques de l'image sismique ;
- (S31) la décimation de l'image d'inclinaison sismique par un facteur de décimation le long d'au moins une dimension horizontale afin d'obtenir une image d'inclinaison sismique décimée ;
- (S32) l'initialisation de surfaces d'horizon sismique décimées, lesdites surfaces d'horizon sismique décimées correspondant à des surfaces d'horizon sismique utilisant la même dimension horizontale que l'image d'inclinaison sismique décimée ;
- (S33) la modification itérative des surfaces d'horizon sismique décimées pour augmenter progressivement l'alignement entre des orientations locales de chaque surface d'horizon sismique décimée et les inclinaisons sismiques locales correspondantes de l'image d'inclinaison sismique décimée, lesdites orientations locales et/ou inclinaisons sismiques locales étant corrigées par le facteur de décimation, jusqu'à ce qu'un critère d'arrêt prédéterminé soit satisfait ;
- (S35) la détermination d'une image de temps géologique relatif, RGT, sur la base des surfaces d'horizon sismique décimées.

2. Procédé (30) selon la revendication 1, dans lequel la correction par le facteur de décimation comprend la multiplication des inclinaisons sismiques locales de l'image d'inclinaison sismique décimée par le facteur de décimation, produisant ainsi une image d'inclinaison sismique décimée corrigée utilisée pour toutes les itérations.

3. Procédé (30) selon la revendication 1 ou 2, dans lequel la correction par le facteur de décimation comprend la division des orientations locales de la surface d'horizon sismique décimée par le facteur de décimation, produisant ainsi des orientations locales corrigées à chaque itération.

4. Procédé (30) selon l'une quelconque des revendications précédentes, comprenant la décimation de l'image d'inclinaison sismique le long de la dimension verticale avec un facteur de décimation strictement inférieur à chaque facteur de décimation utilisé le long d'une dimension horizontale, et dans lequel la correction des orientations locales et/ou des inclinaisons sismiques locales utilise un facteur de décimation qui correspond à un rapport entre un facteur de décimation utilisé le long d'une dimension horizontale et le facteur de décimation utilisé le long de la dimension verticale.

5. Procédé (30) selon l'une quelconque des revendications précédentes, dans lequel la détermination de l'image RGT comprend :

- la détermination d'une image RGT décimée sur la base des surfaces d'horizon sismique décimées ;
- l'interpolation de l'image RGT décimée pour produire l'image RGT.

6. Procédé (30) selon l'une quelconque des revendications précédentes, dans lequel la détermination de l'image RGT comprend, pour chaque pixel de l'image RGT, le comptage du nombre de surfaces d'horizon sismique décimées qui comprennent ledit pixel considéré ou un quelconque pixel situé sur une même colonne que le pixel considéré entre le pixel considéré et un pixel de référence dans la même colonne.

7. Procédé (30) selon l'une quelconque des revendications précédentes, comprenant la normalisation de l'image RGT par un âge géologique de référence prédéterminé, de telle sorte que la valeur maximale des pixels de l'image RGT est égale à l'âge géologique de référence.

8. Procédé (30) selon l'une quelconque des revendications précédentes, comprenant la décimation également de l'image sismique afin d'obtenir une image sismique décimée, et dans lequel l'initialisation des surfaces d'horizon sismique décimées comprend :

- (S320) la sélection de traces sismiques de l'image sismique décimée ;
- (S321) l'identification de pixels des traces sismiques sélectionnées qui correspondent à des extrema locaux des traces sismiques sélectionnées ;
- pour chacun des pixels identifiés : (S322) la définition d'une surface d'horizon sismique décimée comprenant ledit pixel identifié.

9. Procédé (30) selon la revendication 8, dans lequel la surface d'horizon sismique décimée définie pour un pixel identifié est une surface horizontale comprenant ledit pixel identifié.

**10.** Procédé (30) selon la revendication 8 ou 9, dans lequel les traces sismiques sélectionnées comprennent des traces sismiques sélectionnées aléatoirement dans l'image sismique décimée.

**11.** Procédé (30) selon l'une quelconque des revendications 8 à 10, dans lequel les traces sismiques sélectionnées comprennent des traces sismiques espacées de manière régulière de l'image sismique décimée.

**12.** Procédé (30) selon l'une quelconque des revendications précédentes, dans lequel l'évaluation de l'alignement, entre des orientations locales d'une surface d'horizon sismique décimée et les inclinaisons sismiques locales correspondantes de l'image d'inclinaison sismique décimée, ignore les colonnes de l'image d'inclinaison sismique décimée qui sont mappées à des colonnes de l'image sismique pour lesquelles aucune trace sismique n'est disponible et/ou pour lesquelles les traces sismiques ne satisfont pas un critère de qualité prédéterminé.

**13.** Produit de programme informatique comprenant des instructions qui, lorsqu'elles sont exécutées par au moins un processeur, configurent ledit au moins un processeur pour réaliser un procédé de traitement (30) selon l'une quelconque des revendications précédentes.

**14.** Support de stockage lisible par ordinateur comprenant des instructions qui, lorsqu'elles sont exécutées par au moins un processeur, configurent ledit au moins un processeur pour réaliser un procédé de traitement (30) selon l'une quelconque des revendications 1 à 12.

**15.** Système informatique pour traiter une image sismique, ledit système informatique comprenant au moins un processeur configuré pour réaliser un procédé de traitement (30) selon l'une quelconque des revendications 1 à 12.

Fig. 1

Fig. 2

**Fig. 3**

a)

b)

**Fig. 4**

**a)**

$P_1$

50

52

51

**b)**

$P_1$

50

52

51

**c)**

52

$P_1$

50

51

**Fig. 5**

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TOMAS VAN HOEK et al.** Geometric attributes for seismic stratigraphic interpretation. *The Leading Edge*, vol. 29 (9), 1056-1065

- **LOMASK et al.** Flattening without picking. *Geophysics*, July 2006, vol. 71 (4), 13-20